# EUROPÄISCHE PATENTSCHRIFT

(11) **EP 1 384 601 B1**
(45) Veröffentlichungstag und Bekanntmachung des Hinweises auf die Patenterteilung: **14.12.2005**
(21) Anmeldenummer: 03016119.4
(22) Anmeldetag: 16.07.2003
(51) Int. Cl.: B60C 11/18

(54) **Fahrzeugreifen**
Vehicle tire
Bandage pneumatique pour véhicule

(30) Priorität: 23.07.2002 DE 10234391
(43) Veröffentlichungstag der Anmeldung: 28.01.2004
(73) Patentinhaber: Ralf Bohle GmbH, 51580 Reichshof (DE)
(72) Erfinder: Jahn, Holger, 51702 Bergneustadt (DE); Shon, Li Tae, Dongnae-Gu, Busan, 607-753 (KR)
(74) Vertreter: Patentanwälte Ruff, Wilhelm, Beier, Dauster & Partner

(56) Entgegenhaltungen:
- EP-A- 0 435 620
- EP-A- 0 662 396
- EP-A- 1 095 795
- PATENT ABSTRACTS OF JAPAN vol. 009, no. 198 (M-404), 15. August 1985 (1985-08-15) & JP 60 061312 A (YOKOHAMA GOMU KK), 9. April 1985 (1985-04-09)
- PATENT ABSTRACTS OF JAPAN vol. 009, no. 098 (M-375), 27. April 1985 (1985-04-27) & JP 59 223504 A (YOKOHAMA GOMU KK), 15. Dezember 1984 (1984-12-15)

## Beschreibung

Die Erfindung betrifft einen Fahrzeugreifen, insbesondere einen Fahrradreifen, mit einer Reifenkarkasse, mit einer für einen Fahrbahnkontakt vorgesehenen Lauffläche und zwei gegenüberliegenden Seitenwänden, wobei die Reifenkarkasse wenigstens abschnittsweise einen Reifeninnenraum definiert, wenigstens teilweise aus einem ersten gummiartigen Material besteht und wenigstens zwischen der Lauffläche und dem Reifeninnenraum eine Pufferschicht aus einem zweiten gummiartigen Material vorgesehen ist.

Aus der Europäischen Offenlegungsschrift EP 0 901 915 A2 ist ein gattungsgemäßer Fahrradreifen bekannt. Eine Pufferschicht ist zwischen eine Lauffläche und einen Reifeninnenraum eingebracht, wobei zwischen der Pufferschicht selbst und dem Reifeninnenraum noch eine sogenannte Brecher-Schicht vorgesehen ist, um die Pannensicherheit des Reifens weiter zu erhöhen. Das Material der Pufferschicht kann eine Elastizität aufweisen, die eine gute Stossdämpfung des Reifens ergibt, so dass die Stossdämpfung des Reifens ungefähr dem eines Reifens ohne Pufferschicht entspricht. Die Pufferschicht kann aus einem Material bestehen, das für hochspringende Bälle vorgesehen ist. Der mit der Pufferschicht versehene Reifen soll einen Rollwiderstand aufweisen, der in etwa dem Rollwiderstand eines Reifens ohne Pufferschicht entspricht.

Aus der europäischen Offenlegungsschrift EP 0 662 396 A1 ist ein Nutzfahrzeugreifen bekannt, der eine Reifenkarkasse mit einer für ein Fahrbahnkontakt vorgesehenen Laufflächenschicht und zwei gegenüberliegenden Seitenwänden aufweist, wobei die Reifenkarkasse wenigstens abschnittsweise einen Reifeninnenraum definiert und, abgesehen von einer Gürtelstruktur aus Stahlbändem, aus Gummimaterial besteht. Zwischen der Laufflächenschicht und der Gürtelschicht ist eine sogenannte Basisschicht aus gegenüber der Laufflächenschicht unterschiedlichem Gummimaterial vorgesehen. An beiden Seiten der Laufflächenschicht ist eine Reifenschulter aus einem dritten Gummimaterial vorgesehen. Die oberhalb der Gürtelschicht angeordnete Basisschicht weist einen Verlustfaktor Tangens δ bei 60° von 0,075 auf, wohingegen die Laufflächenschicht einen Verlustfaktor Tangens δ von 0,090 aufweist. Die Schulterbereiche weisen einen Tanges bei 60° von 0,1 auf. Die Laufflächenschicht weist etwa die fünffache Dicke der Basisschicht auf und erstreckt sich, in Richtung auf den Reifeninnenraum zu gesehen, über mehr als die Hälfte der Reifendicke.

Mit der Erfindung soll ein Fahrzeugreifen, insbesondere ein Fahrradreifen geschaffen werden, der einen guten Pannenschutz bei gleichzeitig niedrigen Rollwiderstand aufweist.

Erfindungsgemäß ist hierzu ein Fahrzeugreifen, insbesondere ein Fahrradreifen, mit einer Reifenkarkasse, die eine für einen Fahrbahnkontakt vorgesehene Lauffläche und zwei gegenüberliegende Seitenwände aufweist, vorgesehen, wobei die Reifenkarkasse wenigstens abschnittsweise einen Reifeninnenraum definiert, wenigstens teilweise aus einem ersten gummiartigen Material besteht und wenigstens zwischen der Lauffläche und dem Reifeninnenraum eine Pufferschicht aus einem zweiten gummiartigen Material vorgesehen ist, bei dem das zweite gummiartige Material wenigstens bei einer Temperatur von 60°C eine gegenüber dem ersten gummiartigen Material wesentlich verringerte Dämpfung aufweist, das zweite gummiartige Material eine gegenüber dem ersten gummiartigen Material um wenigstens 25% erhöhte Rückprallelelastizität aufweist und die Pufferschicht unterhalb der Lauffläche eine Dicke im Bereich von 4mm bis 6mm aufweist.

Durch diese Maßnahmen wird ein Reifen geschaffen, der bei gutem Pannenschutz einen Rollwiderstand aufweist, der gegenüber dem eines Reifens ohne Pufferschicht unwesentlich verändert ist. Der Erfindung liegt die Erkenntnis zugrunde, dass die Dämpfung mechanischer Anregungen innerhalb der Pufferschicht für die Zunahme des Rollwiderstands beim Einbringen einer Pufferschicht verantwortlich ist. Wesentlich ist dabei eine verringerte Dämpfung bei 60°C. Erfindungsgemäß wird somit ein Material eingesetzt, dessen Verhalten bei 60°C oder auch über einen Temperaturbereich von wenigstens 20°C bis 60°C bei mechanischer Anregung hauptsächlich durch ein elastisches Verhalten und nur zu einem deutlich verringerten Anteil durch ein viskoses Verhalten beschrieben werden kann. Die Dämpfung des Materials der Pufferschicht ist dabei zweckmäßigerweise gegenüber einer Dämpfung des ersten gummiartigen Materials, das durch eine konventionelle Reifengummimischung gebildet ist, um wenigstens 50% verringert. Eine Dicke der Pufferschicht im Bereich von 4mm bis 6mm bietet einen guten Pannenschutz bei gleichzeitig lediglich geringem Mehrgewicht und guten Fahreigenschaften. Die Laumächenschicht und die Schicht, die die Pufferschicht vom Reifeninnenraum trennt, sind deutlich dünner als die Pufferschicht ausgebildet. Ohne die für die Profilierung der Lauffläche erforderlichen Schichtdicke beträgt die durchgehende Schichtdicke der Laufflächenschicht etwa 1mm bis 2mm. Diese Abmessungen sind auch flächenschicht etwa 1mm bis 2mm. Diese Abmessungen sind auch für die Dicke der Schicht zwischen Pufferschicht und Reifeninnenraum vorteilhaft.

Vorteilhafterweise weist das zweite gummiartige Material eine Rückprallelastizität im Bereich von 75% bis 85% auf.

Vorteilhafterweise weist das zweite gummiartige Material eine Rückprallelastizität im Bereich von 75% bis 85% wenigstens im Temperaturbereich von 20°C bis 60°C auf.

Diese Maßnahmen stellen eine äußerst geringe Dämpfung von mechanischen Anregungen in der Pufferschicht und dadurch eine unwesentliche Veränderung des Rollwiderstands gegenüber einem Reifen ohne Pufferschicht sicher.

Die Weiterbildung der Erfindung weist das zweite gummiartige Material einen gegenüber dem ersten gummiartigen Material um wenigstens die Hälfte verringerten Verlustfaktor auf.

Der Verlustfaktor stellt einen möglichen Maßstab für die Dämpfung innerhalb eines Materials dar und wird aus dem Tangens des Winkels zwischen der reellen Komponente oder dem Speichermodul und der imaginären Komponente oder dem Verlustmodul einer Probenantwort auf eine dynamische Verformung konstanter Amplitude berechnet. Geometrisch beschreibt der Verlustwinkel, dessen Tangens den Verlustfaktor ergibt, die Phasenverschiebung zwischen eine Probenanregung und einen Probenantwort.

In Weiterbildung der Erfindung weist das zweite gummiartige Material bei einer Temperatur von 60°C einen gegenüber dem ersten gummiartigen Material um wenigstens die Hälfte verringerten Verlustfaktor auf.

Das erste gummiartige Material weist als konventionelle Reifengummimischung beispielsweise einen Verlustfaktor bei 60°C von wenigstens 0,05 auf. Demgegenüber ist der Verlustfaktor der Pufferschichtmaterials um wenigstens die Hälfte verringert, wobei dies vorteilhafterweise auch in einem Temperaturbereich von 20°C bis 60°C, gegebenenfalls zwischen 0°C und 60°C, erfüllt ist.

In Weiterbildung der Erfindung beträgt der Verlustfaktor des zweiten gummiartigen Materials bei 60°C zwischen 0,017 und 0,021.

Ein solcher, äußerst geringer Wert des Verlustfaktors ermöglicht einen gegenüber einem Reifen ohne Pufferschicht unwesentlich veränderten oder sogar gleichen Rollwiderstand des erfindungsgemäßen Fahrzeugreifens bei gleichzeitig deutlich verbessertem Pannenschutz durch Einbringen der Pufferschicht. Der Venustfaktor des zweiten gummiartigen Materials ist über den gesamten interessierenden Temperaturbereich gering und beträgt bei 0°C beispielsweise 0,068.

In Weiterbildung der Erfindung weist das zweite gummiartige Material eine Dichte auf, die geringer ist als die Dichte von Wasser.

Eine solche geringe Dichte des Materials für die Pufferschicht ermöglicht einerseits eine vergleichsweise geringe Gewichtszunahme des erfindungsgemäßen Reifens gegenüber einem Reifen ohne Pufferschicht und darüber hinaus wird durch die Dichte eine wichtige Eigenschaft eines besonders für die Erfindung geeigneten Materials charakterisiert.

Vorteilhafterweise weist das zweite gummiartige Material eine Dichte im Bereich von 0,98kg/dm³ bis 0,9950kg/dm³ auf.

In Weiterbildung der Erfindung weist das zweite gummiartige Material eine Shore-A-Härte im Bereich vom 35 bis 45 auf.

Durch diese Eigenschaften ist das zweite gummiartige Material in besonderer Weise als Pufferschicht zur Erhöhung der Pannenschutzsicherheit des erfindungsgemäßen Reifens geeignet.

In Weiterbildung der Erfindung weist das zweite gummiartige Material eine Reißzugfestigkeit im Bereich von 18MPa bis 22MPa auf.

Auch diese Eigenschaften führen zu einem hinsichtlich Rollwiderstand und Pannenschutz besonders geeigneten Material für die Pufferschicht.

In Weiterbildung der Erfindung folgen in Richtung auf den Reifeninnenraum zu auf die Laufflächenschicht aus dem ersten gummiartigen Material, nacheinander die Pufferschicht aus dem zweiten gummiartigen Material wenigstens eine in das erste gummiartige Material eingebettete Gewebeschicht und der Reifeninnenraum.

Ein solcher Aufbau des erfindungsgemäßen Reifens mit im Vergleich zum gattungsgemäßen Stand der Technik geringer Anzahl an Schichten trägt zum geringen Rollwiderstand bei und ermöglichst darüber hinaus einen leichten Aufbau des Reifens. Gegebenenfalls kann die Reifenkarkasse besonders leicht ausgeführt werden, um das Mehrgewicht gegenüber einem Reifen ohne Pufferschicht in Grenzen zu halten.

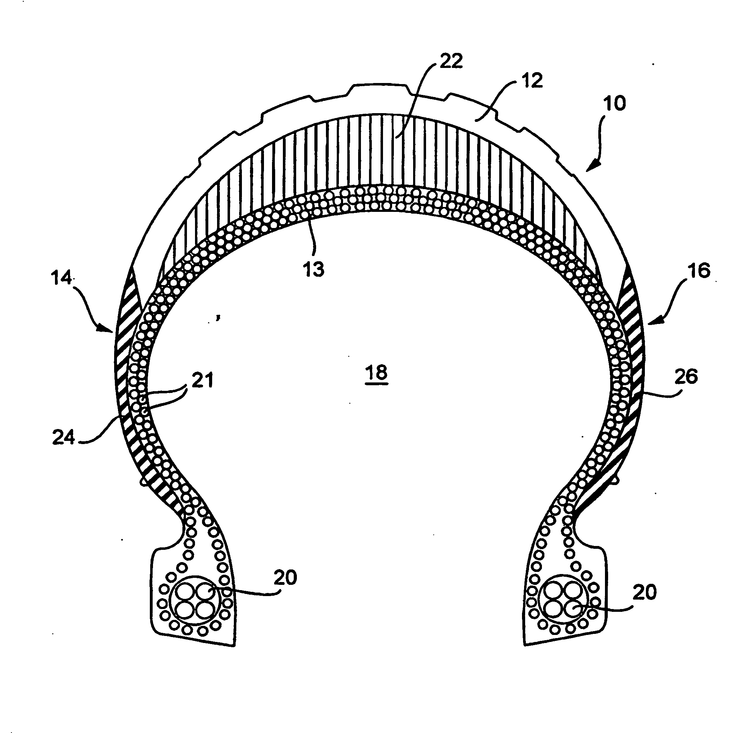

Weitere Merkmale und Vorteile der Erfindung ergeben sich aus den Ansprüchen und der folgenden Beschreibung einer bevorzugten Ausführungsform der Erfindung im Zusammenhang mit der Zeichnung. Die Zeichnung zeigt:

Die einzige Figur mit einer Schnittansicht eines Reifens gemäß einer bevorzugten Ausführungsform der Erfindung.

In der Schnittansicht der einzigen Figur ist ein Fahrradreifen gezeigt, der aus einem gummibeschichteten Nylongewebe, der Karkasse, Drahtkernen sowie einer für den Fahrbahnkontakt vorgesehenen Lauffläche und einer dazwischenliegenden Pufferschicht besteht. Die Materialeigenschaften der Pufferschicht zeigen bei einer Temperatur von 60°C eine wesentlich verringerte Dämpfung gegenüber der Gummimischung der Lauffläche.

Im einzelnen zeigt die Schnittansicht der einzigen Figur einen Fahrradreifen mit einer Reifenkarkasse 10, die eine für einen Fahrbahnkontakt vorgesehene Lauffläche aufweist, die an der Außenseite einer Laufflächenschicht 12 gebildet ist. Die Reifenkarkasse 10 weist darüber hinaus zwei gegenüberliegende Seitenwände 14 und 16 auf und begrenzt durch ihren U-förmigen Querschnitt abschnittsweise einen Reifeninnenraum 18. Im Reifeninnenraum 18 kann beispielsweise ein konventioneller Schlauch angeordnet werden. Die freien Enden der Seitenwände 14 und 16 sind dafür vorgesehen, in einer konventionellen, nicht dargestellten Felge aufgenommen zu werden. An den freien Enden der Seitenwände 14 und 16 sind in an und für sich konventioneller Weise jeweils einer oder mehrere Stahldrähte 20 eingebettet, um die Reifenkarkasse 10 zu stabilisieren. Weiterhin wird die Reifenkarkasse 10 durch eingebettete Gewebefäden 21 stabilisiert, die in unmittelbarer Nähe der Begrenzung der Reifenkarkasse 10, die den Reifeninnenraum 18 definiert, in eine Schicht 13 im Randbereich der Reifenkarkasse 10 eingebettet sind. In einem Bereich der Schicht 13, der in der Reifenmitte unterhalb einer Pufferschicht 22 liegt, sind drei zueinander versetzte Lagen von Gewebefäden 21 eingebettet. Im Bereich der Seitenwände 14 und 16 sind lediglich zwei zueinander versetzte Lagen von Gewebefäden 21 in die Schicht 13 eingebettet.

Im Bereich der Seitenwände 14 und 16 der Reifenkarasse 10 ist die Schicht 13 mit einem zusätzlichen Gummiauftrag versehen, der in der Schnittansicht durch die Schicht 24 bzw. 26 dargestellt ist. Die Schicht 24 bzw. die Schicht 26 schließt sich an das Ende der Laufflächenschicht 12 an und endet kurz oberhalb des Bereichs der Reifenkarkasse 10, der beim montierten Reifen bereits in der Felge zu liegen kommt. Die Schichten 24 und 26 weisen eine von der Laufflächenschicht 12 unterschiedliche Gummimischung auf und dienen beispielsweise zur Gewährleistung einer besseren Haftung eines retro-reflektierenden Streifens oder zur Farbgebung der Seitenwände 14 und 16. Die gezeigte Reifenkarkasse 10 verwirklicht einen sogenannten Skin-Reifen, bei dem die tragende Funktion der Seitenwände 14 und 16 allein durch die Schicht 13 mit den Gewebefäden 22 übernommen wird.

Zwischen der Laufflächenschicht 12 und der Schicht 13 im Randbereich der Reifenkarkasse 10, die an den Reifeninnenraum 18 angrenzt, ist die Pufferschicht 22 vorgesehen. Im Falle des dargestellten Fahrradreifens weist die Pufferschicht 22 an ihrer dicksten Stelle eine Dicke von 4mm bis 6mm auf, wohingegen die Laufflächenschicht 12 und die Schicht 13 deutlich dünner ausgeführt sind. Ausgehend von dieser größten Dicke am Scheitel verjüngt sich die Pufferschicht 22 zu beiden Seiten der Lauffläche hin. Die Pufferschicht 22 erstreckt sich seitlich bis in den Bereich der Seitenwände 14 und 16 der Reifenkarkasse 10 und ist in die Reifenkarkasse 10 so eingebracht, das zwischen dem ersten gummiartigen Material, aus dem die Laufflächenschicht 12 und die Seitenwände 14 und 16 sowie die, die Reifenkarkasse 10 zum Reifeninnenraum 18 hin begrenzende Schicht 13 ausgebildet sind, und dem zweiten gummiartigen Material, aus dem die Pufferschicht 22 besteht, keine relativen Verschiebungen an den Grenzflächen zwischen den beiden Materialien möglich sind. Das erste gummiartige Material umgibt die Pufferschicht 22 vollständig.

Das zweite gummiartige Material, aus dem die Pufferschicht 22 besteht, weist gegenüber dem ersten gummiartigen Material eine wesentlich verringerte Dämpfung auf. In einem Temperaturbereich von 20°C bis 60°C und speziell bei 60°C ist die Dämpfung des zweiten gummiartigen Materials der Pufferschicht 22 gegenüber dem ersten gummiartigen Material der Reifenkarkasse 10 wesentlich verringert. Die Temperatur von 60°C ist dabei ein wichtiger Messpunkt, der eine verlässliche Indikation des Rollwiderstands erlaubt.

Ein Maßstab für die Dämpfung des ersten und des zweiten gummiartigen Materials ist beispielsweise der sogenannte Verlustfaktor Tangens 8. Der Verlustfaktor des Materials der Pufferschicht 22 beträgt bei 60°C zwischen 0,017 und 0,021. Der Verlustfaktor des ersten gummiartigen Materials der Reifenkarkasse, eine konventionelle Reifengummimischung beträgt bei 60°C wenigstens 0,05. Der Verlustfaktor des Materials der Pufferschicht 22 ist gegenüber dem Verlustfaktor des Materials der Reifenkarkasse 10 um mehr als 50% verringert.

Der Verlustfaktor wird durch eine sogenannte dynamisch mechanische Spektroskopie ermittelt. Dieses Verfahren arbeitet mit erzwungenen Schwingungen, wobei die Prüfkörper vorlastfrei geprüft oder auch mit einer statischen Belastung beaufschlagt werden. Die zuvor angegebenen Verlustfaktoren wurden bei einer Prüffrequenz von 10 Hz, bei einer statischen Belastung von 3% und einer dynamischen Belastung von 0,1% gemessen. Eine statische Belastung von 3% ergibt sich aus einer Längendehnung der Probe um 3%, beispielsweise von 30mm auf 3,9mm. Um diesen Wert von 30,9mm wird dann eine dynamische Belastung von 01,% aufgebracht, d.h. eine dynamische Längenänderung zwischen 30,87mm und 30,93mm.

Nach Aufbringen der statischen Belastung werden sinusförmige mechanische Anregungen bei Prüffrequenzen von 0,0001 Hertz bis 100Hertz auf die Probe aufgebracht. Im Falle rein elastischer Systeme, beispielsweise Edelstahlfedern, ist die Probenantwort auf eine konstante dynamische Verformung immer in Phase mit der äußeren Anregung, so dass der Verlustwinkel δ = 0° ist. Viskose Materialien reagieren zeitverzögert auf eine äußere Anregung. In diesem Fall kann eine Phasenverschiebung von 90° beobachtet werden, so dass der Verlustwinkel δ = 90° ist.

Die für Reifen verwendeten gummiartigen Materialien zeigen eine Überlagerung aus elastischem und viskosem Verhalten und werden als viskoelastisch bezeichnet. Zwischen Anregung und Probenantwort tritt eine Phasenverschiebung auf, die für die Beurteilung der Materialeigenschaften von großer Bedeutung ist. Der Zusammenhang zwischen Probenanregung und Probenantwort wird durch die komplexwertige Beschreibung des viskoelastischen Materialverhaltens erfasst. Der komplexe Modul E* besteht aus zwei Komponenten. Die reelle Komponente E' oder der Speichermodul beschreibt die elastischen Eigenschaften der Probe. Die imaginäre Komponente E" oder der Verlustmodul ist ein Maß für die in der Probe dissipierte Energie. Der Quotient von E"/E' beschreibt geometrisch die Phasenverschiebung zwischen Probenanregung und Probenantwort. Ein Maß für die Dämpfung gibt sich aus dem Tangens des Verlustwinkels oder dem Tangens aus E"/E'. Die zuvor angegebenen Werte des Verlustfaktors wurden mit einem Gabo-Qualimeter gemessen, wobei, wie ausgeführt, eine statische Belastung 3% und eine dynamische Belastung 0,1% betrug. Ein Temperaturbereich von -70°C bis 80°C wurde mit einer Erwärmungsrate von 2°C pro Minute durchfahren.

Neben dem Verlustfaktor Tangens δ zeichnet sich das zweite gummiartige Material der Pufferschicht 22 durch weitere wichtige Materialeigenschaften aus.

So weist das Material der Pufferschicht 22 gegenüber dem Material der Reifenkarkasse 10 eine um wenigstens 25% erhöhte Rückprallelastizität auf. Speziell weist das zweite gummiartige Material eine Rückprallelastizität im Bereich vom 75% bis 85% auf. Die Rückprallelastizität der konventionellen Reifengummimischung der Reifenkarkasse 10 liegt unterhalb von 50%. Die Rückprallelastizität kann bei gummiartigen Materialien aus dem Verhältnis von Rückprallhöhe zu Auffallhöhe eines Pendelhammers bestimmt werden, der auf eine Probeplatte von 6mm Dicke fällt. Bei der Bestimmung der Rückprallelastizität handelt es sich um eine indirekte Dämpfungsmessung, die beispielsweise in der DIN-Norm 53512 beschrieben ist.

Wie bereits ausgeführt wurde, ist gemäß der Erfindung von besonderer Bedeutung, dass die elastischen Eigenschaften des Materials der Pufferschicht 22 bei einer Temperatur von 60°C gegeben sind. Um die normalen Betriebstemperaturen eines Fahrradreifens abzudecken, weist das Material der Pufferschicht 22 in einem Temperaturbereich von 20°C bis 60°C eine Rückprallelastizität im Bereich von 75% bis 85% auf.

Eine weitere wichtige Materialeigenschaft des Materials der Pufferschicht 22 betrifft dessen Dichte, die geringer ist als die Dichte von Wasser und im Bereich von 0,98kg/dm³ bis 0,9950kg/dm³ liegt.

Weiterhin weist das Material der Pufferschicht 22 eine Shore-A-Härte im Bereich von 35 bis 45 auf. Diese Materialeigenschaft trägt unter anderem dazu bei, dass der erfindungemäße Reifen einen gegenüber konventionellen Reifen wesentlich verbesserten Pannenschutz aufweist und dennoch keinen erhöhten Rollwiderstand zeigt.

Eine weitere wichtige Materialeigenschaft des Materials der Pufferschicht 22 betrifft des Reißzugfestigkeit, die im Bereich von 18 MPa bis 22MPa liegt. Eine Bruchdehnung liegt bei mindestens 600%, beispielsweise 690% und ein Modulus 300%, das bedeutet diejenige Spannung, die bei einer Dehnung von 300% auftritt, liegt bei 2,4MPa.

Die Materialeigenschaften der Laufflächenschicht 12 sind auf die Materialeigenschaften der Pufferschicht 22 abgestimmt, um gute Fahreigenschaften bei geringem Rollwiderstand zu erreichen. So liegt eine Shore-A-Härte des ersten gummiartigen Materials der Laufflächenschicht 12 bei 66, ein Modulus 300% bei 10,7, eine Zugfestigkeit bei 16,3 MPa und eine Bruchdehnung bei 430%. Wie bereits ausgeführt wurde, liegt der Verlustfaktor des ersten gummiartigen Materials bei 60°C bei wenigstens 0,05.

Die Summe der beschriebenen Materialeigenschaften des Materials der Pufferschicht 22 und des Materials der Laufflächenschicht 12 ermöglichen in Verbindung mit der gewählten Reifenkonstruktion die Bereitstellung eines Fahrradreifens mit gegenüber Reifen ohne Pufferschicht wesentlich verbessertem Pannenschutz, wobei überraschenderweise bei dem erfindungemäßen Reifen trotz Vorsehen der Pufferschicht 22 keine Zunahme des Rollwiderstands zu beobachten ist.

## Patentansprüche

1. Fahrradreifen, mit einer Reifenkarkasse (10), die eine für einen Fahrbahnkontakt vorgesehene Laufflächenschicht (12) und zwei gegenüberliegende Seitenwände (14, 16) aufweist, wobei die Reifenkarkasse (10) wenigstens abschnittsweise einen Reifeninnenraum (18) definiert, wenigstens teilweise aus einem ersten gummiartigen Material besteht und wenigstens zwischen der Lauffläche und dem Reifeninnenraum eine Pufferschicht (22) aus einem zweiten gummiartigen Material vorgesehen ist,
**dadurch gekennzeichnet, dass**
das zweite gummiartige Material wenigstens bei einer Temperatur von 60°C eine gegenüber dem ersten gummiartigen Material wesentlich verringerte Dämpfung aufweist, dass das zweite gummiartige Material eine gegenüber dem ersten gummiartigen Material um wenigstens 25% erhöhte Rückprallelastizität aufweist und dass die Pufferschicht unterhalb der Lauffläche eine Dicke im Bereich von 4mm bis 6mm aufweist

2. Fahrradreifen nach Anspruch 1, **dadurch gekennzeichnet, dass** das zweite gummiartige Material eine Rückprallelastizität im Bereich von 75% bis 85% aufweist.

3. Fahrradreifen nach Anspruch 1, **dadurch gekennzeichnet, dass** das zweite Material wenigstens im Temperaturbereich von 20°C bis 60°C eine Rückprallelastizität im Bereich von 75% bis 85% aufweist.

4. Fahrradreifen nach einem der vorstehenden Ansprüche, **dadurch gekennzeichnet, dass** das zweite gummiartige Material einen gegenüber dem ersten gummiartigen Material um wenigstens die Hälfte verringerten Verlustfaktor aufweist.

5. Fahrradreifen nach einem der vorstehenden Ansprüche, **dadurch gekennzeichnet, dass** das zweite gummiartige Material bei ei ner Temperatur von 60°C einen gegenüber dem ersten gummiartigen Material um wenigstens die Hälfte verringerten Verlustfaktor aufweist.

6. Fahrradeifen nach einem der vorstehenden Ansprüche, **dadurch gekennzeichnet, dass** der Verlustfaktor des zweiten gummiartigen Materials bei 60°C zwischen 0,017 und 0,021 beträgt.

7. Fahrradeifen nach einem der vorstehenden Ansprüche, **dadurch gekennzeichnet, dass** das zweite gummiartige Material eine Dichte aufweist, die geringer ist als die Dichte von Wasser.

8. Fahrradreifen nach Anspruch 7, **dadurch gekennzeichnet, dass** das zweite gummiartige Material eine Dichte im Bereich von 0,98 kg/dm³ bis 0,9950 kg/dm² aufweist.

9. Fahrradeifen nach einem der vorstehenden Ansprüche, **dadurch gekennzeichnet, dass** das zweite gummiartige Material eine Shore-A-Härte im Bereich von 35 bis 45 aufweist.

10. Fahrradeifen nach einem der vorstehenden Ansprüche, **dadurch gekennzeichnet, dass** das zweite gummiartige Material eine Reißzugfestigkeit im Bereich von 18 MPa bis 22 MPa aufweist.

11. Fahrradeifen nach einem der vorstehenden Ansprüche, **dadurch gekennzeichnet, dass** in Richtung auf den Reifeninnenraum (18) zu auf die Laufflächenschicht (12) aus dem ersten gummiartigen Material nacheinander die Pufferschicht (22) aus dem zweiten gummiartigen Material, wenigstens eine Schicht (13) mit in das erste gummiartige Material eingebettetem Gewebe (21) und der Reifeninnenraum (18) folgen.

## Claims

1. Bicycle tyre with a tyre carcass (10) which exhibits a tread layer (12) and two opposite side walls (14, 16) intended for traction, whereby the tyre carcass (10) sectionally defines at least a tyre interior space (18), which consists at least partially of a first rubber-like material and at least between the tread and tyre interior a buffer layer (22) consisting of a second rubber-like material is provided, **characterised in that** the second rubber-like material exhibits an absorption value significantly lower than that of the first rubber-like material at least at a temperature of 60°C, and that the second rubber-like material exhibits at least 25% increased rebound elasticity relative to the first rubber-like material and that the buffer layer under the tread exhibits a thickness of approximately 4mm to 6mm.

2. Bicycle tyre according to Claim 1, **characterised in that** the second rubber-like material exhibits rebound elasticity in the range of 75% to 85%.

3. Bicycle tyre according to Claim 1, **characterised in that** the second rubber-like material exhibits rebound elasticity in the range of 75% to 85% at least in the temperature range from 20°C to 60°C.

4. Bicycle tyre according to one of the preceding claims, **characterised in that** the second rubber-like material exhibits a loss factor reduced by at least half the value compared to that of the first rubber-like material.

5. Bicycle tyre according to one of the preceding claims, **characterised in that** the second rubber-like material exhibits a loss factor reduced by at least half the value compared to that of the first rubber-like material at a temperature of 60° C.

6. Bicycle tyre according to one of the preceding claims, **characterised in that** the loss factor of the second rubber-like material lies between 0.017 and 0.021 at 60°C.

7. Bicycle tyre according to one of the preceding claims, **characterised in that** the second rubber-like material exhibits a density which is less than the density of water.

8. Bicycle tyre according to Claim 7, **characterised in that** the second rubber-like material exhibits a density in the range of 0.98 kg/dm³ to 0.9950 kg/dm³.

9. Bicycle tyre according to one of the preceding claims, **characterised in that** the second rubber-like material exhibits a shore-A-hardness in the range of 35 to 45.

10. Bicycle tyre according to one of the preceding claims, **characterised in that** the second rubber-like material exhibits an ultimate tensile rupture strength in the range of 18 MPa to 22 MPa.

11. Bicycle tyre according to one of the preceding claims, **characterised in that** in the direction towards tyre interior space (18) the tread layer (12), made of the first rubber-like material, the buffer layer (22) made of the second rubber-like material, at least a layer (13) with fabric (21) embedded in the first rubber-like material and the tyre interior space (18) are consecutively arranged.

## Revendications

1. Pneumatique pour bicyclette pourvu d'une carcasse de pneus (10) comportant une couche de bande de roulement (12) prévue pour un contact avec la chaussée et deux parois latérales opposées (14, 16), ladite carcasse de pneus (10) définissant au moins un intérieur de pneumatique par section (18), étant composé au moins partiellement d'un premier matériau caoutchouteux, et au moins une couche tampon (22) composée d'un deuxième matériau caoutchouteux étant prévue entre la bande de roulement et l'intérieur de pneumatique,
**caractérisé en ce que**,
au moins à une température de 60° C, le deuxième matériau caoutchouteux présente un amortissement considérablement réduit par rapport au premier matériau caoutchouteux, **en ce que** le deuxième matériau caoutchouteux présente une élasticité de rebondissement accrue de 25% par rapport au premier matériau caoutchouteux et **en ce que** la couche tampon sous la bande de roulement présente une épaisseur de 4 à 6 mm.

2. Pneumatique pour bicyclette selon la revendication 1, **caractérisé ence que** le deuxième matériau caoutchouteux présente une élasticité de rebondissement de 75 à 85%.

3. Pneumatique pour bicyclette selon la revendication 1, **caractérisé en ce que**, au moins à une température comprise entre 20 et 60° C, le deuxième matériau présente une élasticité de rebondissement de 75% à 85%.

4. Pneumatique pour bicyclette selon l'une quelconque des revendications précédentes, **caractérisé en ce que** le deuxième matériau caoutchouteux présente un facteur de perte réduit d'au moins la moitié par rapport au premier matériau caoutchouteux.

5. Pneumatique pour bicyclette selon l'une quelconque des revendications précédentes, **caractérisé en ce qu** 'à une température de 60° C, le deuxième matériau caoutchouteux présente un facteur de perte réduit d'au moins la moitié par rapport au premier matériau caoutchouteux.

6. Pneumatique pour bicyclette selon l'une quelconque des revendications précédentes, **caractérisé en ce que**, à 60° C, le facteur de pertes du deuxième matériau caoutchouteux est compris entre 0,017 et 0,021.

7. Pneumatique pour bicyclette selon l'une quelconque des revendications précédentes, **caractérisé en ce que** le deuxième matériau caoutchouteux présente une densité inférieure à celle de l'eau.

8. Pneumatique pour bicyclette selon la revendication 8, **caractérisé en ce que** le deuxième matériau caoutchouteux présente une densité de 0,98 kg/dm³ à 0,9950 kg/dm³.

9. Pneumatique pour bicyclette selon l'une quelconque des revendications précédentes, **caractérisé en ce que** le deuxième matériau caoutchouteux présente une dureté Shore A de 35 à 45.

10. Pneumatique pour bicyclette selon l'une quelconque des revendications précédentes, **caractérisé en ce que** le deuxième matériau caoutchouteux présente une résistance à la traction de 18 MPa à 22 MPa.

11. Pneumatique pour bicyclette selon l'une quelconque des revendications précédentes, **caractérisé en ce que**, dans une direction à l'intérieur du bandage pneumatique (18) se succèdent la couche de bande de roulement (12) composée du premier matériau caoutchouteux la couche tampon (22) composée du deuxième matériau caoutchouteux, au moins une couche (13) avec un tissu (21) inclus dans le premier matériau caoutchouteux et l'intérieur du pneumatique (18).
